# EUROPÄISCHE PATENTANMELDUNG

(11) **EP 3 852 303 A1**
(43) Veröffentlichungstag der Anmeldung: **21.07.2021**
(21) Anmeldenummer: 20152234.9
(22) Anmeldetag: 16.01.2020
(51) Int. Cl.: H04L 9/00, G01S 19/01, H04L 9/06

(54) **SIGNAL- UND/ODER DATEN-ÜBERTRAGUNGS- UND/ODER VERSCHLÜSSELUNGSEINHEIT MIT PRN-CODE GENERATOR MIT INTEGRIERTER INTEGRITÄTSPRÜFUNG, RECHNERGESTÜTZTES VERFAHREN ZUR GESICHERTEN SIGNALÜBERTRAGUNG**

(71) Anmelder: Siemens Aktiengesellschaft, 80333 München (DE)
(72) Erfinder: Falk, Rainer, 85586 Poing (DE)

(57) **Zusammenfassung**

Die Erfindung betrifft eine Signalübertragungseinheit mit PRN-Code Generator, wie er beispielsweise bei der Spreizbandübertragung "spread spectrum" für eine bidirektionale oder unidirektionale Signalübertragung oder Satelliten gestützte Navigation einsetzbar ist, insbesondere einen PRN-Code Generator mit integrierter Integritätsprüfung sowie ein rechnergestütztes -CI-Verfahren zur gesicherten Signalübertragung mittels Integritätsprüfung innerhalb eines PRN Code Generators. Die Erfindung hat den Vorteil, dass sichergestellt werden kann, dass eine PRN-Code-Folge tatsächlich die erwartete PRN-Codefolge ist. Dies ist insbesondere vorteilhaft, wenn der Code-Generator selbst rekonfigurierbar ist und/oder wenn der Code-Generator auf einer rekonfigurierbaren Hardware-Plattform wie beispielsweise FPGA, embedded FPGA auf einem ASIC, microcoded state machine auf einem ASIC oder FPGA realisiert ist.

## Beschreibung

Die Erfindung betrifft eine Signalübertragungseinheit mit PRN-Code Generator, wie er beispielsweise bei der Spreizbandübertragung "spread spectrum" für eine bidirektionale oder unidirektionale Signalübertragung oder Satelliten gestützte Navigation einsetzbar ist, insbesondere einen PRN-Code Generator mit integrierter Integritätsprüfung sowie ein rechnergestütztes -computer-implementiertes Verfahren zur gesicherten Signalübertragung mittels Integritätsprüfung innerhalb eines PRN Code Generators.

Pseudo-zufällige Codefolgen, sogenannten Pseudo-Zufallsrauschcodes oder Pseudo-Random-Noise Codes, kurz PRNC oder PRN-Codes oder PRN-Codefolgen, werden beispielsweise bei der Funkübertragung und/oder in Navigationssystemen verwendet. Sie können als Spreizcode verwendet werden, welche eine Frequenzspreizung eines Nachrichtensignals bewirken. Durch die breitbandige Übertragung weist ein solches Signal eine hohe Robustheit gegenüber Störungen auf. Spreizungsfolgen werden beispielsweise in Satellitennavigationssystemen GNSS (Global Navigation Satelite System), wie GPS (Global Positioning System), Glonass, Beidou oder Galileo verwendet. Dabei liegt das empfangene Satellitensignal im Allgemeinen unterhalb eines Rauschpegels. Ein Empfänger kann das ausgestrahlte Signal erst durch Korrelation mit einem ihm selbst vorliegenden passenden PRN-Code detektieren und decodieren.

Es ist bekannt, kryptographische PRN-Codes bei der Spreizbandübertragung zu verwenden. Die Codefolge wird dabei abhängig von einem kryptographischen Schlüssel erzeugt. Ein Empfänger kann den passenden PRN-Code zur Korrelation und Decodierung des Empfangssignals nur generieren, wenn er den zur Aussendung des Signals vom Sender verwendeten PRN-Code kennt. Dazu benötigt er den kryptographischen Schlüssel.

Es sind Verfahren zur Modulation von Signalen, beispielsweise aus der US 10225038 B2, bekannt, durch die verhindert oder zumindest stark erschwert wird, dass aus einem gesicherten Signal der darin enthaltene Replika-Pseudo-Zufallsrauschcode und/oder Korrelationsschlüssel extrahiert werden kann.

Ein PRN Code kann insbesondere bei einer Spreizbandübertragung verwendet werden, um Datensignale zu modulieren, beispielsweise durch Multiplikation und/oder Mischen mit der PRN-Code-Signalfolge, und/oder kann ein PRN Code verwendet werden, um ein Empfangssignal zu empfangen, beispielsweise durch Korrelation mit der PRN-Code-Signalfolge. Die Bits - die auch als "Chip" bezeichnet werden - einer PRN Codefolge werden im Allgemeinen mit einer hohen Datenrate generiert, beispielsweise einige Mbit/sec oder sogar Gbit/sec.

Aus der US 7120696B1 ist ein kryptographisches Kommunikationssystem bekannt, das die Generierung eines kryptographischen PRN-Codes offenbart.

Ein kryptographisch erzeugter PRN-Code kann für einen Schutz der Daten- und/oder Signalübertragung auf eine Übertragungsschicht "physical layer security", insbesondere bei der Drahtlosübertragung, verwendet werden. Beispielsweise für eine bidirektionale oder eine unidirektionale Datenübertragung, z.B. zur Datenübertragung oder für Satelliten-gestützte Navigation. Die Sicherheit der Datenübertragung hängt dabei davon ab, dass die verwendete PRN Codefolge tatsächlich wie erwartet kryptographisch generiert wird.

Andernfalls könnte bei einem Sender ein Sendesignal unzureichend geschützt ausgesendet werden. Bei einem Empfänger könnte es sein, dass Empfangseigenschaften verschlechtert werden und/oder lokale Angriffe auf das Gerät vereinfacht werden, beispielsweise über einen Seitenkanalangriff.

Als "Seitenkanalangriff" wird eine kryptographische Methode bezeichnet, die die physische Implementierung eines Krypto-Systems in einem Gerät wie einer Chipkarte, ausnützt. Das Prinzip beruht darauf, ein kryptographisches Gerät bei der Ausführung kryptographischer Algorithmen zu beobachten und Korrelationen zwischen den beobachteten Daten und dem verwendeten Schlüssel zu finden. Diese charakteristische Information kann durch die Analyse der Laufzeit des Algorithmus, des Energieverbrauchs des Prozessors während der Berechnungen und/oder der elektromagnetischen Ausstrahlung gewonnen werden. Aktive, invasive Angriffe bestehen darin, in das Gerät einzugreifen und Fehler bei der Ausführung des kryptologischen Algorithmus einzubringen. Eine Seitenkanalanalyse liefert Aufschluss darüber.

Ein Seitenkanalangriff erfolgt üblicherweise durch einen Angreifer, um einen verwendeten kryptographischen Schlüssel zu rekonstruieren. Solche Technologien zur Erfassung und Auswertung von Seitenkanalinformationen können grundsätzlich auch konstruktiv verwendet werden, um die Integrität eines Geräts zu überwachen, siehe z.B. US9430644B2. Eine solche Überwachung ist jedoch sehr aufwendig und eher dazu geeignet, eine grundsätzliche Fehlfunktion zu erkennen eines Geräts zu erkennen. Auch würde eine Integritätsverletzung erst mit einer relativ hohen zeitlichen Verzögerung erkannt werden.

Vor diesem Hintergrund ist es Aufgabe der vorliegenden Erfindung, ein Verfahren zur Integritätsprüfung eines PRN-Code Generators, insbesondere einen effizient realisierbaren Test zur Selbst-Überprüfung, der in Realzeit während der PRN-Code Generierung stattfindet, zu schaffen.

Diese Aufgabe wird durch den Gegenstand der vorliegenden Erfindung, wie er in der Beschreibung, den Figuren und den Ansprüchen offenbart ist, gelöst.

Gegenstand der Erfindung ist dementsprechend eine Signal- und/oder Daten-Übertragungs- und/oder Verschlüsselungseinheit mit einem Pseudozufallsrauschen-"PRN"-Code-Generator, wie er innerhalb einer Basisbandverarbeitung einer Sender- und/oder Empfängereinheit oder in einer Ver-/Entschlüsselungseinheit einsetzbar ist, dergestalt, dass im PRN-Code-Generator ein kryptographischer PRN-Code abhängig von einem kryptographischen Schlüssel erzeugt wird, bevor jener in einen Pseudozufallsrauschen-Pufferspeicher geschrieben wird, von dem er von einer Modulations-, Demodulations-, Korrelator-, Verschlüsselungs- und/oder Entschlüsselungseinheit auslesbar ist, wobei der PRN-Code Generator zumindest einen ersten Prozessor umfasst, der einen PRN-Code aus Initialdaten mit einem kryptographischen Schlüssel erzeugt, und zum anderen zumindest einen zweiten Prozessor umfasst, wobei der zweite Prozessor auf der Basis des gleichen kryptographischen Schlüssels und der gleichen Initialdaten Abschnitte des PRN Codes zur Integritätsprüfung durch Berechnung erzeugt, dergestalt, dass innerhalb des PRN-Code-Generators und vor einer temporären Speicherung des PRN-Codes in einem/dem Pufferspeicher (Code Buffer) zumindest eine Vorrichtung zum Vergleich zumindest eines duplizierten Abschnitts der vom ersten Prozessor kryptographisch erzeugten PRN Code-Folge mit den zumindest einem Abschnitt der vom zweiten Prozessor berechneten Abschnitten vorgesehen ist, wobei in der Vorrichtung zum Vergleich eine Sperr-, Stopp- und/oder-Alarm-Funktion aktivierbar ist, die in Abhängigkeit von einem vorgegebenen Grad an Übereinstimmung des mindestens einen durch Duplikation erhaltenen Abschnitts mit dem mindestens einen berechneten Abschnitt auslösbar ist.

Insbesondere betrifft die Erfindung IT-Security einschließlich Verschlüsselung, dabei wiederum insbesondere Spreizband-Übertragung, auch Spread Spectrum, physical layer security genannt.

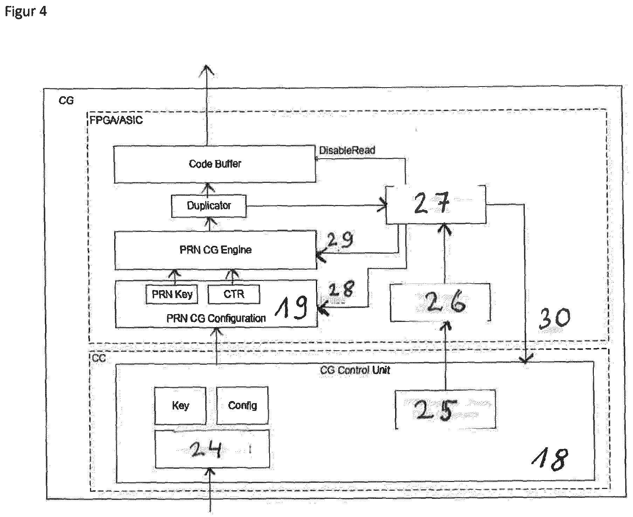

Die "Vorrichtung zum Vergleich" ist vorteilhaft als PRN-Code Integrity Check - Modul 27 - siehe Figur 4, ausgebildet.

Folgende Ausführungsformen sind von der Erfindung insbesondere umfasst:
Eine Signal- und/oder Daten-Übertragungs- oder Verschlüsselungs-einheit, die für eine unidirektionale Signalübertragung ausgelegt ist.

Eine Signal- und/oder Daten-Übertragungs- oder Verschlüsselungs-einheit, die für eine bidirektionale Datenübertragung ausgelegt ist.

Eine Signal- und/oder Daten-Übertragungs- oder Verschlüsselungs-einheit, bei der der Code-Generator, der erste und/oder der zweite Prozessor ganz oder teilweise in Form einer rekonfigurierbaren Hardware-Plattform wie einem ASIC/FPGA-Anteil der Übertragungseinheit realisiert ist.

Eine Signal- und/oder Daten-Übertragungs- oder Verschlüsselungs-Einheit, bei der der Code-Generator, der erste und/oder der zweite Prozessor ganz oder teilweise Software-basiert realisiert ist.

Eine Signal- und/oder Daten-Übertragungs- oder Verschlüsselungs-einheit, bei der die Alarmfunktion einen lesenden Zugriff auf den Code-Pufferspeicher sperrt.

Eine Signal- und/oder Daten-Übertragungs- oder Verschlüsselungs-einheit, bei der die Stopp-Funktion den ersten Prozessor anhält.

Eine Signal- und/oder Daten-Übertragungs- oder Verschlüsselungs-einheit, bei der die Stopp-Funktion in Form einer Erase Komponente realisiert ist.

Eine Signal- und/oder Daten-Übertragungs- oder Verschlüsselungs-Einheit, bei der vorgesehen ist, dass als Alarmfunktion von der "Vorrichtung zum Vergleich", also insbesondere dem Modul 27 der Figur 4, dem "PRN-Code Integrity Check-Modul" ein Alarmsignal, beispielsweise ein elektrisches und/oder optisches Alarmsignal, damit eine andere Komponente innerhalb und/oder außerhalb des Code-Generators darauf reagieren kann, bereitgestellt ist.

Eine Signal- und/oder Daten-Übertragungs- oder Verschlüsselungs-Einheit, bei der vorgesehen ist, dass in der Vorrichtung zum Vergleich ein Speicher vorgesehen ist, in der die ermittelten Prüfdaten des Vergleichs zur Auswertung speicherbar sind.

Außerdem ist Gegenstand der Erfindung ein rechnergestütztes Verfahren zur gesicherten Signalübertragung mittels Integritätsprüfung innerhalb eines PRN-Code-Generators folgende Verfahrensschritte umfassend:
- Bereitstellen eines digitalen Signals für eine Basisbandverarbeitung
- Erzeugen eines PRN-Codes im PRN-Code Generator in Abhängigkeit von einem kryptographischen Schlüssel
- Gleichzeitiges Vorausberechnen zumindest von Abschnitten der Codefolge durch den PRN-Code Generator auch in Abhängigkeit von dem gleichen kryptographischen Schlüssel
- Duplizieren des erzeugten PRN-Codes vor dessen Zwischenspeicherung im Code Buffer-Speicher des PRN-Code-Generators,
- Vergleichen des Duplikats oder Abschnitte davon mit berechneten PRN-Code-Abschnitten als Integritätsprüfung für den PRN-Code,
- Auswertung des Ergebnisses des Vergleichs mit der Folge, dass entweder der im PRN-Code Generator gespeicherte PRN-Code zur Korrelation im Korrelator ungehindert in dem Code Buffer-Speicher gespeichert und weitergeleitet wird,
   oder
- ein ALARM-Befehl 30, ein ERASE-Befehl 28 und/oder ein DISABLE READ-Befehl 32 und/oder ein STOP-Befehl 29 die Signalübertragung unterbricht.

Insbesondere umfasst die Erfindung auch ein rechnergestütztes Verfahren zur gesicherten Signalübertragung mittels Integritätsprüfung, bei dem innerhalb einer vorgegebenen Zeitspanne zumindest ein durch gleichzeitiges Vorausberechnen bestimmter Abschnitt der Codefolge mit dem duplizierten Abschnitt verglichen wird.

Zudem umfasst die Erfindung ein Rechnergestütztes Verfahren zur gesicherten Signalübertragung mittels Integritätsprüfung, bei dem das Auslösen einer Stopp- und/oder Alarmfunktion als Folge der Integritätsprüfung an einen vorgegebenen Schwellwert gekoppelt ist.

Die Erfindung umfasst dabei auch ein rechnergestütztes Verfahren zur gesicherten Signalübertragung mittels Integritätsprüfung, bei dem das Auslösen einer Stopp- und/oder Alarmfunktion als Folge der Integritätsprüfung an das Überschreiten eines vorgegebenen Schwellwerts innerhalb einer vorgegebenen Zeitspanne gekoppelt ist.

Die Erfindung umfasst außerdem ein rechnergestütztes Verfahren zur gesicherten Signalübertragung mittels Integritätsprüfung, bei dem im Fall einer Nicht-Übereinstimmung eine Stopp-Funktion ausgelöst wird, die die Code-Generierung anhält.

Schließlich umfasst die Erfindung ein Rechnergestütztes Verfahren zur gesicherten Signalübertragung mittels Integritätsprüfung, das zur verschlüsselten unidirektionalen oder bidirektionalen Datenübertragung eingesetzt wird.

Allgemeine Erkenntnis der Erfindung ist es, dass Pseudozufällige Codefolgen zumindest in Abschnitten auf einem speziell sicherheitsgeschützten Prozessor mit hoher Verlässlichkeit korrekt und damit vertrauenswürdig berechenbar sind, , so dass Abschnitte einer pseudo-zufälligen Codefolge vorausberechnet und mit den entsprechenden Abschnitten der tatsächlich mit hoher Datenrate generierten und dann durch Duplizieren erzeugten PRN-Codes verglichen werden können. Die Erfindung sieht vor, dass im Fall einer vordefinierten Abweichung des Duplikats vom berechneten Abschnitt ein Alarmsignal und/oder eine Sperr- und/oder Stoppfunktion ausgelöst wird, die die mangelnde Integrität des erzeugten PRN Codes signalisieren und die Übertragung und Entschlüsselung stoppen.

Ein PRN-Code ist eine pseudozufällige Codefolge (pseudo random noise). Ein PRN-Code wird beispielsweise kryptographisch generiert. Er kann insbesondere bei einer Spreizbandübertragung (spread spectrum) verwendet werden, um ein Datensignal zu modulieren, beispielsweise durch Multiplikation und/oder Mischen mit dem PRN-Code-Signalfolge oder um ein Empfangssignal zu empfangen - beispielsweise durch Korrelation mit der PRN-Code-Signalfolge. Die Bits - auch als Chip bezeichnet - einer PRN-Code-Folge werden im Allgemeinen mit einer hohen Datenrate generiert. Als "hohe Datenrate" wird beispielsweise eine Datenrate von einigen Mbit/sec oder sogar einigen Gbit/sec bezeichnet.

Ein kryptographischer PRN-Code kann für einen Schutz der Datenübertragung auf eine Übertragungsschicht "physical layer security" insbesondere auch bei einer Drahtlosübertragung verwendet werden. Drahtlosübertragungen sind im Zusammenhang mit bidirektionaler oder unidirektionaler Datenübertragung, beispielsweise zur Datenübertragung oder für Satelliten-gestützte Navigation. Die Sicherheit der Datenübertragung hängt davon ab, dass tatsächlich erwartete PRN-Code-Folgen generiert werden.

Ein PRN-Code-Generator ist dementsprechend ein Gerät, das einen PRN-Code erzeugt. Dieses Gerät ist in der Regel rechnergestützt und/oder umfasst einen Prozessor. Der Prozessor zur Generierung der PRN-Code-Folge kann auf Basis einer rekonfigurierbaren Digitalschaltung, z.B. einem FPGA oder einem ASIC mit einem eingebetteten "embedded" FPGA oder als rekonfigurierbare Digitallogik, realisiert sein. Er kann jedoch auch als feste Digitalschaltung, z.B. auf einem ASIC, realisiert sein.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

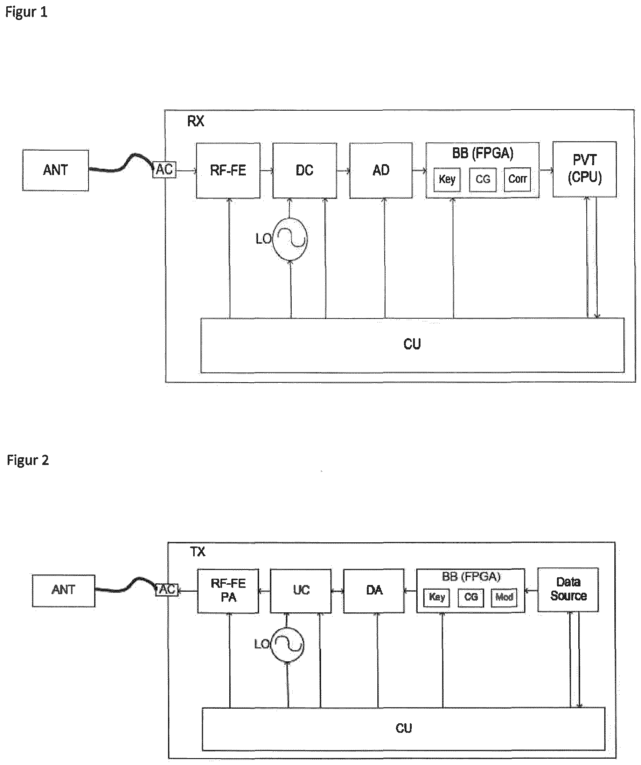

Figur 1 zeigt beispielsweise ein Blockschaltbild mit wesentlichen Funktionsblöcken eines Empfängers RX, an den über eine Antennenbuchse AC - Antenna Connector- eine Antenne ANT angeschlossen werden kann;Alternativ könnte auch eine interne Antenne vorgesehen sein. Das von der Antenne bereitgestellte Signal wird durch eine Hochfrequenzbaugruppe RF-FE -Radio Frequency Front End- bearbeitet, z.B. Filterung und/oder Verstärkung, dann einem Down-Converter DC bereitgestellt, der das Signal mit einem Signal des Local Oscillator LO mischt, so genanntedown conversion, und einem Analog-Digital-Wandler AD bereitstellt. Dieser stellt der Basisbandverarbeitung BB zumindest ein digitalisiertes Signal bereit, wobei auch mehrere Signale bereitgestellt werden können, z.B. ein I-Signal In-Phase-Signalkomponente und/oder ein Q-Signal Quadratur-Signalkomponente.

Innerhalb der Basisbandverarbeitung BB wird ein PRN-Code Spreiz-Code durch einen Code-Generator -CG- erzeugt und es erfolgt eine Korrelation durch einen Korrelator -Corr- mit dem digitalisierten Empfangssignal. Die dadurch ermittelte Laufzeitschätzung, beispielsweise Pseudoranges, wird einer Berechnungskomponente PVT bereitgestellt, die daraus beispielsweise die Position, Geschwindigkeit und Zeit berechnet, z.B. unter Nutzung eines Least-Square-Algorithmus oder einem Kalman-Filter.

Der Empfänger RX wird von einer Steuerung CU -control unitgesteuert. Diese konfiguriert auch die Baugruppen, z.B. um ein Frequenzband durch Änderung der Frequenz des Local Oszillators LO zu wählen, den Eingangs-Filter der Hochfrequenzbaugruppe RF-FE zu konfigurieren, um die Bandbreite und Abtastrate des Analog-Digital-Wandlers AD zu konfigurieren oder um ein Modulationsverfahren eine Basisbandverarbeitung BB auszuwählen. Die von der Berechnungskomponente PVT ermittelten Daten werden durch die Berechnungskomponente PVT der Steuerung CU bereitgestellt. Dort können sie z. B. weiterbearbeitet werden und auf einer Nutzerschnittstelle (nicht dargestellt) ausgegeben werden. Eine oder mehrere der Baugruppen können in einer nicht dargestellten Variante auch Statussignale der Steuerung CU bereitstellen. In einer konkreten Realisierung erfolgt die Basisbandverarbeitung BB typischerweise auf einem FPGA-Baustein oder einem ASIC und die Berechnungen der Berechnungskomponente PVT sind üblicherweise als Softwarekomponente realisiert, die eine CPU/Prozessor für diese Berechnungen konfigurieren. Der Signalfluss und die Signalverarbeitung erfolgen dabei insbesondere kontinuierlich, d. h. es wird fortlaufend das Empfangssignal digitalisiert und bearbeitet.

Ein "Code-Buffer-Speicher" ist ein Pufferspeicher innerhalb einer Signalübertragungseinheit.

"Kryptographisch" bedeutet in dem Zusammenhang, dass der Code mit Hilfe eines kryptographischen VerschlüsselungsAlgorithmus wie z.B. DES, 3DES, AES, einer kryptographischen Stromchiffre und/oder einer kryptographischen Hash-Funktion erzeugt ist. Ein kryptographischer Schlüssel bildet vorzugsweise ein Geheimnis zwischen einem Sender, der die Nachrichten und/oder die Signalfolge sendet, und einem Empfänger, der die Nachrichten bzw. die Signalfolge empfängt. Die kryptographische Funktion ist vorzugsweise ebenfalls dem Sender und dem Empfänger bekannt. Die kryptographische Funktion und/oder der (kryptographischen) Schlüssel werden hier im PRN-Code Generator auch zum Berechnen der berechneten Abschnitte PRN-Codefolge verwendet, die als Grundlage für den Vergleich mit der erzeugten PRN-Codefolge in der Vorrichtung zum Vergleich eines duplizierten Abschnittes dient.

Ein PRN-Code ist - wie der Name schon sagt - eine pseudozufällige Codefolge, die beispielsweise kryptographisch in einem PRN-Code Generator abhängig von einem kryptographischen Schlüssel generiert werden kann.

Eine kryptographische Generierung erfolgt vorzugsweise mittels einer kryptographischen Funktion, beispielsweise einer Verschlüsselungsfunktion, einer Hashfunktion und/oder einer kryptographischen Einwegfunktion.

Die tatsächlich aufgrund des digitalen Signals erzeugten PRN-Codes und/oder die gleichzeitig berechneten Abschnitte des PRN-Codes werden dabei vorzugsweise von einer kryptographischen Funktion, beispielsweise einer Verschlüsselungsfunktion, einer Stromchiffre, einer Hashfunktion oder einer Einwegfunktion, erzeugt. Beispielsweise wird zum Berechnen der PRN-Codes und/oder der gleichzeitig berechneten Abschnitte des PRN-Codes der PRN-Code in Abschnitte mit vorgegebener Länge unterteilt.

Ein Abschnitt eines PRN-Codes kann auch als Code-Snippet bezeichnet werden. Ein Abschnitt kann beispielsweise eine Länge von 4, 8, 16, 32, 64, 128, 256, 1024, 65 536, 200 000, 1 000 000 Bit aufweisen. Diese Abschnitte können dann beispielsweise als die berechneten Abschnitte zur Integritätsprüfung dienen.

Der Vergleich kann durch einen Bit-weisen Vergleich erfolgen. Dabei kann eine gewisse Anzahl von fehlerhaften, unterschiedlichen Bits noch als zulässig gelten, z.B. 0,001%; 0,1%; 1%; 10%, und/oder es kann eine exakte bitweise Identität gefordert sein. Es ist jedoch auch möglich, einen statistischen Ähnlichkeitsparameter z.B. durch Korrelation zu ermitteln, wobei der generierte PRN-Code als zulässig gilt, wenn der ermittelte Korrelationswert einen vorgegebenen Schwellwert überschreitet.

Zur Erzeugung des PRN-Codes im PRN-Code Generator kann beispielsweise eine kryptographische Funktion verwendet werden, die beispielsweise mittels eines - kryptographischen - Schlüssels die Abschnitte des PRN-Codes berechnet. Die kryptographische Funktion ist vorzugsweise ebenfalls dem Sender und dem Empfänger bekannt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), einen DSP (Digitaler Signalprozessor, engl. Digital Signal Processor), einen Grafikprozessor GPU (Graphics Processing Unit), einen Crypto-Controller, ein Multi-Chip-Modul und/oder einen SoC (System-on-Chip) handeln. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und Teilaspekte der Erfindung implementiert oder realisiert.

Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren.

Eine "Signalverarbeitungseinheit" ist beispielsweise ein Korrelator, ein Modulator und/oder ein Mischer.

Unter einem "Korrelator" kann im Zusammenhang mit der Erfindung beispielsweise ein Gerät verstanden werden, das mittels der Kreuzkorrelation den Zeitversatz zwischen zwei Signalen genau bestimmt. Mögliche Ausprägungen sind beispielsweise Digitalschaltungen, Spezialcomputer, Analogschaltungen oder Computerprogramme. Die Signale können beispielsweise technisch codierte Funksignale sein. Sie können beispielsweise auch Radar-, Sonar- oder optische Signale sein.

Unter einem "Modulator" versteht man eine Einheit, die das Signal moduliert, also beispielsweise mit einem Rauschsignal und/oder einem Störsignal moduliert. Grundsätzlich werden aber auch weitere, beliebige Modulatoren, z.B. ein Gegentaktmischer, Ringmischer bzw. Ringmodulator, ein Übertrager, oder Signalverknüpfungen wie Addition, Subtraktion, Multiplikation, Tabellen-Lookups etc. als Modulatoren bezeichnet. Diese Verfahren können elektronisch realisiert sein, aber ebenso digital in Form einer digitalen Signalverarbeitung durch einen digitalen Signalprozessor, kurz DSP, oder durch eine digitale Signalverarbeitungsanordnung auf einem programmierbaren Logikbaustein oder FPGA oder einem ASIC oder einem Signalverarbeitungs-integrierten Schaltkreis.

Unter einem "Charakteristikum des PRN-Codes" wird beispielsweise ein Abschnitt, also ein so genannter Integritäts-Prüf-Snippet, verstanden, dessen Integritätsprüfung beispielsweise über einen bitweisen Vergleich und/oder eine Korrelation der berechneten Abschnitte des PRN-Codes mit den erzeugten und duplizierten Abschnitten erfolgt. Andererseits kann ein Charakteristikum des PRN-Codes auch ein Mittelwert, eine Varianz und/oder eine oder mehrere statistische Eigenschaften einer Zufallszahlenfolge und/oder eine Fourier Transformation -FFTdes zeitdiskreten Signals sein. Als Charakteristikum des PRN Codes kann weiterhin die Bildung eines erwarteten Integritäts-Prüf-Snippet zu einer bestimmten Zeit vom Code-Generator gelten.

Eine "Signalübertragungseinheit" ist beispielsweise ein Empfänger oder ein Sender eines Signals. Ein Empfänger umfasst zumindest eine Antennenbuchse - Antenna Connector -, die an eine Antenne anschließbar ist und/oder eine integrierte Antenne. Der Empfänger hat ein Steuerwerk - CU - einen Prozessor umfassend. Im Empfänger wird das von der Antenne bereitgestellte Signal von einer Hochfrequenzbaugruppe, Radio-Frequency Front-End oder "RF-FE", bearbeitet, beispielsweise durch Filterung und/oder Verstärkung, dann einem Down-Converter "DC" bereitgestellt, der das Signal mit einem Signal des Local Oscillator LO mischt. Den Vorgang nennt man auch "down conversion".

Unter einem "ASIC" - application specific integrated circuit - Anteil versteht man eine anwenderspezifizierte integrierte Schaltung, wie sie beispielsweise auf eine Platine montiert wird. Diese Anteile sind fest programmiert und ihr Vorteil liegt darin, dass sie wegen der Anpassung ihrer Architektur auf ein spezielles Problem sehr viel effizienter und schneller als eine funktionsgleiche Umsetzung per Software in einem Mikrokontroller. In einem Mobiltelefon hat das z. B. den Vorteil, dass der Akku länger hält und das Gerät kompakter ist.

Erfindungsgemäß ist vorgesehen, dass ein PRN-Code-Generator, der von einer Steuereinheit, wie einem Crypto-Controller, konfiguriert wird mit speziellen Schlüsseldaten und/oder speziellem IV-Wert. Der erzeugte PRN-Code wird in einen Puffer, also einen Speicher wie einem Dual-Port-RAM, geschrieben, so dass er von einer Signalverarbeitungseinheit wie einem Korrelator, Modulator und/oder Mischer, auslesbar ist.

Dabei werden gemäß der Erfindung Teilabschnitte der PRN-Code-Folge doppelt berechnet. Diese Teilabschnitte dienen als Integritäts-Prüf-Snippets. Diese Teilabschnitte werden beispielsweise von einer Steuereinheit, einem Crypto-Controller oder einem zweiten, insbesondere einem zweiten eingeschränkten, PRN-Codegenerator berechnet.

So ist es möglich, dass zur Laufzeit überprüft wird, ob ein gebildetes Duplikat der vom Code-Generator gebildete PRN-Code-Folge tatsächlich die Integritäts-Prüf-Snippet-Teilabschnitte umfasst.

Der Vergleich kann bitweise erfolgen oder beispielsweise über eine Korrelation. Es kann der Ausgabewert eines Korrelators geprüft werden, der davon abhängt, wie viele Bits übereinstimmen. Weiterhin kann geprüft werden, zu welchen Zeitpunkten ein erwarteter Integritäts-Prüf-Snippet vom Code-Generator gebildet wird.

Außerdem können statistische Prüfungen der PRN-Codefolge durchgeführt werden, beispielsweise kann ein Mittelwert, eine Varianz berechnet werden oder es kann eine FFT (fast Fourier transformation) erfolgen und mit einer erwarteten Verteilung verglichen werden, wie sie grundsätzlich von physikalischen Zufallszahlengeneratoren bekannt sind. Dadurch kann überprüft werden, ob die gebildete PRN-Code-Folge tatsächlich die statistischen Eigenschaften einer Zufallszahlenfolge aufweist.

Nur wenn erfolgreich überprüft wird, dass die erwarteten Integritäts-Prüf-Snippet-Teilabschnitte in der PRN-Code-Folge tatsächlich auftauchen, wird ein Freigabesignal bereitgestellt und die Signalübertragung läuft ungehindert weiter.

Andernfalls wird kein Freigabesignal bereitgestellt. Bei ausbleibendem Freigabesignal wird beispielsweise das Schreiben der PRN-Code-Folge in den Pufferspeicher gesperrt, der lesende Zugriff auf den Pufferspeicher gesperrt, der Pufferspeicher gelöscht, der PRN-Code-Generator angehalten und/oder zumindest eine interne Konfigurationsinformation des Code-Generators gelöscht. Weiterhin kann als Folge des Ausbleibens des Freigabesignals vorgesehen sein, dass kumulativ oder alternativ der Steuereinheit einer anderen Komponente, insbesondere einer Komponente zur Überwachung von Fehlfunktionen wie beispielsweise einem Tamper-Monitor und/oder einer Watchdog, siehe https://de.wikipedia.org/wiki/Watchdog ein Alarmsignal bereitgestellt wird.

Der Code-Generator kann auf einem FPGA, siehe https://de.wikipedia.org/wiki/Field-Programmable-Gate-Array; einem "Application-Specific-Integrated-Circuit -"ASIC"- einem "embedded" also einem in einen ASIC eingebetten in FPGA und/oder einem digitalem Signalprozessor, einem "DSP", oder einer festen oder rekonfigurierbaren Digitalschaltung realisiert sein. Dabei ist es insbesondere vorteilhaft, wenn der Code-Generator rekonfigurierbar ist und/oder auf einer rekonfigurierbaren Plattform realisiert ist.

Der erste Prozessor kann als eine rekonfigurierbare Digitalschaltung ausgebildet sein, wie beispielsweise ein FPGA, "embedded" FPGA Block und/oder rekonfigurierbare Logik auf einem ASIC. Der zweite Prozessor kann ein Mikrocontroller, Crypto-Controller und/oder eine CPU sein.

Figur 1 zeigt ein Blockschaltbild mit wesentlichen Funktionsblöcken eines RX Empfängers 1 nach dem Stand der Technik. Über eine Antennenbuchse 2 ist eine Antenne 3 angeschlossen, die selbstverständlich auch innerhalb des RX Empfängers 1 vorgesehen sein kann. Ein von der Antenne 3 bereitgestelltes Signal wird bei dem hier gezeigten RX Empfänger 1 in einer Hochfrequenzbaugruppe 4 "Radio Frequency Front End" bearbeitet, wie im Blockschaltbild durch den Pfeil vom Prozessor 5 zur Hochfrequenzbaugruppe 4 dargestellt. Der Prozessor 5 ist hier die Steuerung oder "control unit" -CU- des Empfängers. Die Bearbeitung kann beispielsweise Filterung und/oder Verstärkung des Signals umfassen. Das bearbeitete Signal wird einem Down-Converter 6 bereitgestellt, der das Signal mit einem Signal des Local Oscillator 7 LO mischt und einem Analog-Digital-Wandler 8 bereitstellt. Dieser stellt dem Basisbandverarbeiter 9 "BB" zumindest ein digitalisiertes Signal bereit, wobei natürlich auch mehrere digitalisierte Signale bereitgestellt werden können. Innerhalb der Basisbandverarbeitung 9 wird ein kryptographischer PRN-Code durch einen Code-Generator 10 abhängig von einem kryptographischen Schlüssel 11 erzeugt und es erfolgt eine Korrelation durch einen Korrelator 12 mit dem digitalisierten Empfangssignal.

Die Basisbandverarbeitung 9 BB ist typischerweise auf einem Field Programmable Gate Array Baustein, kurz FPGA-Baustein, oder einem ASIC realisiert.

Durch die Basisbandverarbeitung BB werden Werte, welche das Satellitensignal kennzeichnen, wie beispielsweise Satellitenidentifizierer, Frequenzband oder Satellitenbahndaten, ausgewertet und der Steuerung 5 bereitgestellt.

Die ermittelten Pseudoranges werden einer Positions-Geschwindigkeits-Zeit "PVT"-Komponente bereitgestellt, die daraus die Position, Geschwindigkeit und Zeit berechnet.

Die Steuerung 5 steuert den Empfänger und konfiguriert auch die einzelnen Module wie den Code Generator 10. Die Steuerung 5 konfiguriert auch die Baugruppen, z.B. um ein Frequenzband zu wählen durch Änderung der Frequenz des Local Oszillators 7, oder den Eingangs-Filter der Hochfrequenzbaugruppe 4 zu konfigurieren, oder um die Bandbreite und/oder Abtastrate des AD-Wandlers zu konfigurieren, oder um ein Modulationsverfahren des BB, des Basisbandverarbeiters oder auch Basebandprocessing auszuwählen.

Der Signalfluss und die Signalverarbeitung erfolgen dabei kontinuierlich, d.h. es wird fortlaufend das Empfangssignal digitalisiert und bearbeitet.

Die PVT-Berechnung ist üblicherweise auf einer "CPU" - also einem Prozessor - als Software realisiert. Die ermittelten PVT-Daten werden von der PVT-Unit 13 der Steuerung 5 bereitgestellt, wie durch den gegenläufigen Pfeil dargestellt ist. Dort können sie z.B. weiterverarbeitet werden und auf einer Nutzerschnittstelle (in Figur 1 nicht dargestellt) ausgegeben werden. Eine oder mehrere der Baugruppen können in einer nicht dargestellten Variante auch Statussignale der Steuerung 5 oder Control Unit 5 bereitstellen.

Figur 2 zeigt einen Sender, der entsprechend dem Empfänger aus Figur 1 aufgebaut ist. Eine Datenquelle 14 stellt Nutzerdaten bereit, die ausgesendet werden. Diese werden innerhalb der Basisbandverarbeitung 9 im Modulator 15 moduliert, wobei eine Spreizung mit einem kryptographischen Spreizcodesignal erfolgt, das von dem Code-Generator 10 gebildet wird. Es erfolgt eine Digital-Analog-Wandlung durch einen DA-Wandler, ein Mischen auf die Sendefrequenz durch einen Up-Converter 16 "UC" schließlich eine Leistungsverstärkung und Filterung in der Hochfrequenzbaugruppe RF-FE mit Power Amplifier, also Leistungsverstärker 17.

Eine derartige Sende- und/oder Empfangsfunktionalität kann auch in einem Transceiver integriert sein.

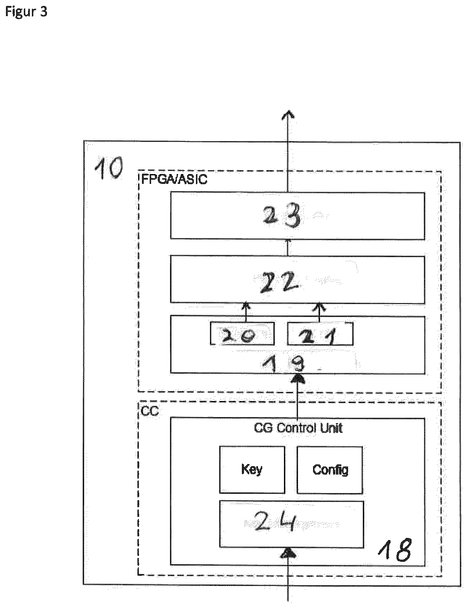

Figur 3 zeigt eine beispielhafte Ausführungsform eines Code-Generators nach dem Stand der Technik. Gezeigt ist der Code-Generator 10, der beispielsweise teilweise als Digitalschaltung auf einem FPGA und/oder auf einem ASIC und teilweise Software-Basiert als Crypto Controller "CC" 18 und/oder Soft-CPU-Prozessor realisiert ist. Dabei ist es vorteilhaft, wenn eine CG Control Unit, wie beispielsweise der Crypto Controller 18 die Schlüssel- und/oder Konfigurationsdaten speichert. Daraus kann eine Konfigurationsinformation für den FPGA/ASICbasierten Anteil des Code Generators ermittelt werden. Gemäß dem hier gezeigten Stand der Technik wird die Konfigurationsinformation in ein Register 19 geschrieben, hier realisiert als PRN-Schlüssel 20 und Counter-Wert CTR 21. Eine PRN-CG Engine 22, also eine Pseudo-Random-Noise-Code-Generator-Bereitstellungseinheit ermittelt die PRN-Code Folge und schreibt sie in einen Code-Puffer-Speicher 23. Von dort kann sie je nach Signalübertragungseinheit von einem Modulator oder einem Korrelator ausgelesen werden. Anstatt einem ASIC/FPGA-Baustein kann auch jede andere passende Realisierungstechnologie für die Basisbandverarbeitung BB, beispielsweise ein digitaler Signalprozessor - DSP- ein Netzwerkprozessor oder ein Vektorprozessor eingesetzt werden.

Figur 4 schließlich zeigt eine beispielhafte Ausführungsform der Erfindung, sowohl des Code-Generators der Signalübertragungseinheit als auch den Ablauf des rechnergestützten Verfahrens zur gesicherten Signalübertragung.

Zu erkennen ist, dass neben dem linken Ablaufstrang, der auch in Figur 3 gezeigt ist, ein rechter und von den Verfahrensschritten her reduzierter, Ablaufstrang abgebildet ist. Der rechts abgebildeten Ablaufstrang im Code Generator, der in Figur 4 dargestellt ist, umfasst ein Modul zur die Integritäts-Prüfung nach der hier dargestellten beispielhaften Ausführungsform der Erfindung.

Die beiden gleichgeschalteten Module Key Management 24 und PRN integrity check data generator 25 erzeugen anhand der gegebenen Daten im key management 24 - respektive in vermindertem Umfang, insbesondere abschnittsweise - im PRN integrity check data generator 25 Konfigurationsinformation, die zum einen in das Register 19 und zum anderen in das Modul "PRN integrity check data" 26, das genau wie das Register 19 aufgebaut sein und funktionieren kann, geschrieben werden.

Das Modul 26 berechnet daraus PRN- Integrity-Check-Daten, die als Prüfdaten der "Vorrichtung zum Vergleich", insbesondere dem Modul "PRN-Code Integrity Check" 27 bereitgestellt werden. Die Bereitstellung kann direkt oder über Zwischenschritte erfolgen. Jedenfalls liegt dem Modul "PRN-Code Integrity Check" 27 letztendlich zumindest abschnittsweise der vorausberechnete PRN Code vor. Dieser wird im Modul "PRN-Code Integrity Check" 27 mit dem tatsächlichen Code, der mittels eines Duplikators 31 ebenfalls dem Modul "PRN-Code Integrity Check" 27 zur Verfügung gestellt wird, verglichen.

Im Modul "PRN-Code Integrity Check" 27 wird/werden beispielsweise ein Charakteristikum oder mehrere Charakteristika des PRN-Codes auf vollständige oder - in vorgegebenem Rahmen - teilweise Übereinstimmung mit dem duplizierten PRN Code verglichen.

Das Ergebnis des Vergleichs wird im Modul "PRN-Code Integrity Check" 27 verarbeitet und an eine Steuerung weitergeleitet, die dann im Falle eines als nicht ausreichend übereinstimmenden Ergebnisses des Vergleichs gewerteten Prüfungsergebnisses verschiedene Verfahrensschritte additiv oder alternativ aktiviert.

Die Steuerung des Moduls "PRN-Code Integrity Check" 27 kann je nach Wertung des Ergebnisses des Vergleichs entweder
- die Informationen aus dem Register 19 durch den Befehl 28 "ERASE" ganz oder teilweise löschen, unleserlich machen und/oder überschreiben, und/oder
- die Ermittlung der PRN Code Folge in der PRN-CG Engine 22 durch den Befehl 29 "STOP" anhalten, und/oder
- das Signal 30 "ALARM" an den Crypto Controller 18 leiten, und/oder
durch den Befehl 32 "DISABLE READ" den Inhalt des Code-Puffer-Speichers 23 teilweise oder ganz unleserlich machen. Die "DISABLE READ" - Funktion ist beispielsweise als eine Sperrfunktion ausgeführt. Dabei kann die Sperrfunktion beispielsweise das Sperren eines Schreibvorgangs in den Pufferspeicher und/oder Sperren eines Lesezugriffs durch eine andere Komponente beinhalten. Insbesondere kann die Sperrfunktion als eine Überschreibfunktion zum Überschreiben des PRN-Codes mit Ersatzdaten ausgeführt sein, z.B. mit dem Überschreiben mit Nullwerten und/oder einem Ersatz-PRN-Code, beispielsweise einem deterministisch generierten, also nicht-kryptograph generiertem, PRN-Code und/oder das Überschreiben mit einem mit Ersatz-Schlüssel und/oder Ersatz-Initialdaten generieten kryptographischen Ersatz-PRN-Code, umfassen.

Dabei kann beispielsweise die durch den STOP-Befehl 29 aktivierte Funktion im PRN-Code Generator die Erzeugung von PVT-Daten unterbrechen und/oder signalisieren, dass die Integritätsprüfung negativ verlaufen ist. Es sind weitere oder andere Reaktionen auf ein Alarmsignal möglich, z.B. ein Löschen des Schlüssels PRN-Key ersetzten, ein Ersetzen des Schlüssels PRN-Key und/oder des Zählerwerts CTR durch einen Ersatzwert, oder das Ersetzen der PRN-Codefolge durch eine Ersatz-PRN-Codefolge (nicht dargestellt). Dabei wird dann anstatt der korrekten PRN-Codefolge eine definitiv falsche PRN-Codefolge bereitgestellt. Somit wird immer eine PRN-Codefolge bereitgestellt, aber entweder die als korrekt überprüfte oder definiert eine vorgegebene ungültige Ersatz-PRN-Codefolge. Dadurch wird erreicht, dass nicht eine nur teilweise korrekte, degradierte PRN-Codefolge ausgegeben wird. Dadurch kann ein eindeutiges Fehlerverhalten z.B. eines Satellitennavigationsempfängers erzwungen werden, sobald eine ungültige generierte PRN-Codefolge detektiert wurde.

Nach einer vorteilhaften Ausführungsform der Signal- und/oder Daten-Übertragungseinheit mit einem PRN-Code-Generator ist vorgesehen, dass in der Vorrichtung zum Vergleich zumindest ein berechneter Abschnitt mit einer tatsächlich generierten PRN-Codefolge so verglichen wird, dass der berechnete Abschnitt innerhalb eines vorgegebenen Zeitintervalls im tatsächlich generierten PRN-Codefolge enthalten ist.

Das Modul PRN-Code Integrity Check 27 zur Integritätsprüfung vergleicht -beispielsweise innerhalb eines vorgegebenen Zeitabschnitts - ob der oder die berechnete(n) Abschnitte im Duplikat des real erzeugten PRN-Codes enthalten ist/sind.

Figur 4 zeigt eine Realisierungsvariante eines Code-Generators nach einer Ausführungsform der Erfindung. Die CG Control Unit berechnet dazu ein PRN-Integrity-Check-Daten, beispielsweise abschnittsweise. Dazu werden Abschnitte und/oder Ausschnitte des PRN-Codes vorausberechnet. Diese können direkt als Prüfdaten bereitgestellt werden, oder eine zu einem gewissen Grad veränderte Information - beispielsweise 0,001%; 0,1%; 1%, 10%, der Bits fehlerhaft - können in der Wertung des Prüfergebnisses noch als in Ordnung oder keine Abweichung bildend akzeptiert werden. Es können auch weitere Informationen bereitgestellt werden, beispielsweise Schwellwerte und/oder Prüfzeitpunkte. Auch kann überwacht werden, wie lange die Abweichung vorliegt. So kann eine Abweichung erst dann erkannt werden, wenn die Abweichung länger als eine vorgegebene Zeitdauer, z.B. 1 Mikrosekunde, 1 Millisekunde, 100 Millisekunden, 1 Sekunde, 10 Sekunden, vorliegt.

Im ersten Prozessor, dem beispielsweise als ASIC/FPGArealisierten Anteil des Code Generators 10, wird die im PRN CG Engine 22 tatsächlich generierte PRN-Codefolge im Duplikator 31 dupliziert und einer PRN-Code-Integritätsprüfeinheit Modul PRN-Code Integrity Check 27 bereitgestellt. Diese ermittelt, ob die tatsächlich generierte PRN-Codefolge die durch die PRN-Integrity-Check-Daten im Modul "PRN integrity check data" 26 definierten Prüfkriterien erfüllt.

In dem in Figur 4 dargestellten Beispiel erfolgt die Prüfung direkt durch die PRN-Code-Integrity-Check-Einheit, dem Modul PRN-Code Integrity Check 27. Bei einem als "Abweichung" klassifizierten Ergebnis der Integritäts-Prüfung stellt das Modul PRN-Code Integrity Check 27 beispielsweise folgende Signale an andere Module oder Komponenten bereit:
- Der "DISABLE READ" genannte Befehl 32 sperrt den Lesezugriff auf den Code Puffer Speicher 23,
- der "STOP"-Befehl 29 hält die PRN-Engine 22 an,
- der "ERASE"-Befehl löscht die aktuelle PRN CG Konfiguration und schließlich wird von
- der CG Control Unit, dem Crypto Controller 18, ein Alarmsignal auf ein entsprechendes Signal des Modul PRN-Code Integrity Check 27 bereitgestellt.

In einer anderen Ausführungsform der Erfindung können beispielsweise auch von einer entsprechenden PRN-Code-Integrity-Check-Einheit Prüfdaten ermittelt und zur Auswertung einer CG Control Unit übermittelt werden.

Die Erfindung hat den Vorteil, dass sichergestellt werden kann, dass eine PRN-Code-Folge tatsächlich die erwartete PRN-Codefolge ist. Dies ist insbesondere vorteilhaft, wenn der Code-Generator selbst rekonfigurierbar ist und/oder wenn der Code-Generator auf einer rekonfigurierbaren Hardware-Plattform wie beispielsweise FPGA, embedded FPGA auf einem ASIC, microcoded state machine auf einem ASIC oder FPGA realisiert ist.

Dadurch wird eine Fehlfunktion, eine Nutzung eines fehlerhaft konfigurierten rekonfigurierbaren Code-Generators, eine missbräuchliche Nutzung und/oder ein Reverse Engineering eines Code-Generators vermieden oder beträchtlich erschwert.

Durch die Erfindung ist es erstmals möglich, dass ein Selbst-Test einer Implementierung eines Krypto Algorithmus überflüssig wird und damit die Datenübertragung ohne Verzögerung aber trotzdem mit Selbst-Test erfolgt. Durch die Erfindung kann erkannt werden, wenn der Code-Generator nicht ordnungsgemäß funktioniert oder manipuliert wurde.

Die Erfindung ist für unidirektionale und bidirektionale Signalübertragung, beispielsweise für Navigationssysteme, einsetzbar, aber auch für alle Arten von Verschlüsselungen und alle Verschlüsselungsgeräte.

### Bezugszeichenliste

1- RX Empfänger
2-Antennenbuchse (Antenna Connector, AC)
3-Antenne (ANT)
4-Hochfrequenzbaugruppe RF-FE
5-Steuerung, Prozessor
6- Down Converter DC
7-Local Oscillator LO
8-Analog-Digital-Wandler AD
9-Basisbandverarbeitung BB
10-Code-Generator CG
11- kryptographischer Schlüssel KEY
12-Korrelator Corr
13- Position-Geschwindigkeits-Zeit-Komponente "PVT"
14- Datenquelle
15-Modulator
16-Up-Converter UC
17-Leistungsverstärker
18-Crypto Controller
19-Register
20-PRN-Schlüssel
21-Counter Wert CTR
22-PRN-CG Engine
23-Code Puffer Speicher
24- Key Management
25- PRN Integrity Check Data Generator
26-PRN Integrity Check Data
27- PRN-Code Integrity Check
28-Befehl ERASE
29-Befehl STOP
30-Signal ALARM
31-Duplikator
32-Befehl - DISABLE READ

## Patentansprüche

1. Signal- und/oder Daten-Übertragungs- und/oder Verschlüsselungs-einheit mit einem Pseudozufallsrauschen-"PRN"-Code-Generator, wie er innerhalb einer Basisbandverarbeitung einer Sender- und/oder Empfängereinheit oder in einer Ver-/Entschlüsselungseinheit einsetzbar ist, dergestalt, dass im PRN-Code-Generator ein kryptographischer PRN-Code abhängig von einem kryptographischen Schlüssel erzeugt wird, bevor jener in einen Pseudozufallsrauschen-Pufferspeicher geschrieben wird, von dem er von einer Modulations-, Demodulations-, Korrelator-, Verschlüsselungs- und/oder Entschlüsselungseinheit auslesbar ist, wobei der PRN-Code Generator zumindest einen ersten Prozessor umfasst, die einen PRN-Code aus Initialdaten mit einem kryptographischen Schlüssel erzeugt und zum anderen zumindest einen zweiten Prozessor umfasst, wobei der zweite Prozessor auf der Basis des gleichen kryptographischen Schlüssels und der gleichen Initialdaten Abschnitte des PRN Codes zur Integritätsprüfung durch Berechnung erzeugt, dergestalt, dass innerhalb des PRN-Code-Generators und vor einer temporären Speicherung des PRN-Codes in einem/dem Pufferspeicher (Code Buffer-) zumindest eine Vorrichtung zum Vergleich zumindest eines duplizierten Abschnitts der vom ersten Prozessor kryptographisch erzeugten PRN Code-Folge mit den zumindest einem Abschnitt der vom zweiten Prozessor berechneten Abschnitten vorgesehen ist, wobei in der Vorrichtung zum Vergleich eine Sperr-, Stopp- und/oder-Alarm-Funktion aktivierbar ist, die in Abhängigkeit von einem vorgegebenen Grad an Übereinstimmung des mindestens einen durch Duplikation erhaltenen Abschnitts mit dem mindestens einen berechneten Abschnitt auslösbar ist.

2. Signal- und/oder Daten-Übertragungs- oder Verschlüsselungs-einheit nach Anspruch 1, die für eine unidirektionale Signalübertragung ausgelegt ist.

3. Signal- und/oder Daten-Übertragungs- oder Verschlüsselungs-einheit nach Anspruch 1, die für eine bidirektionale Datenübertragung ausgelegt ist.

4. Signal- und/oder Daten-Übertragungs- oder Verschlüsselungs-einheit nach einem der vorhergehenden Ansprüche, bei der der Code-Generator, der erste und/oder der zweite Prozessor ganz oder teilweise in Form einer rekonfigurierbaren Hardware-Plattform wie einem ASIC/FPGA-Anteil der Übertragungseinheit realisiert ist.

5. Signal- und/oder Daten-Übertragungs- oder Verschlüsselungs-einheit nach einem der vorhergehenden Ansprüche, bei der der Code-Generator, der erste und/oder der zweite Prozessor ganz oder teilweise Software-basiert realisiert ist.

6. Signal- und/oder Daten-Übertragungs- oder Verschlüsselungs-einheit nach einem der vorhergehenden Ansprüche, wobei die Alarmfunktion einen lesenden Zugriff auf den Code-Pufferspeicher sperrt.

7. Signal- und/oder Daten-Übertragungs- oder Verschlüsselungs-einheit nach einem der vorhergehenden Ansprüche, wobei die Stopp-Funktion den ersten Prozessor anhält.

8. Signal- und/oder Daten-Übertragungs- oder Verschlüsselungs-einheit nach einem der vorhergehenden Ansprüche, wobei die Stopfunktion in Form einer Erase Komponente realisiert ist.

9. Signal- und/oder Daten-Übertragungs- oder Verschlüsselungs-einheit nach einem der vorhergehenden Ansprüche, wobei vorgesehen ist, dass als Alarmfunktion der Vorrichtung zum Vergleich 27 ein Alarmsignal bereitgestellt ist.

10. Signal- und/oder Daten-Übertragungs- oder Verschlüsselungs-einheit nach einem der vorhergehenden Ansprüche, wobei vorgesehen ist, dass in der Vorrichtung zum Vergleich ein Speicher vorgesehen ist, in der die ermittelten Prüfdaten des Vergleichs zur Auswertung speicherbar sind.

11. Rechnergestütztes Verfahren zur gesicherten Signalübertragung mittels Integritätsprüfung innerhalb eines PRN-Code-Generators folgende Verfahrensschritte umfassend:
- Bereitstellen eines digitalen Signals für eine Basisbandverarbeitung
- Erzeugen eines PRN-Codes im PRN-Code Generator in Abhängigkeit von einem kryptographischen Schlüssel
- Gleichzeitiges Vorausberechnen zumindest von Abschnitten der Codefolge durch den PRN-Code Generator auch in Abhängigkeit von dem gleichen kryptographischen Schlüssel
- Duplizieren des erzeugten PRN-Codes vor dessen Zwischenspeicherung im Code Buffer-Speicher des PRN-Code-Generators,
- Vergleichen des Duplikats oder Abschnitte davon mit berechneten PRN-Code-Abschnitten als Integritätsprüfung für den PRN-Code,
- Auswertung des Ergebnisses des Vergleichs mit der Folge, dass entweder der im PRN-Code Generator gespeicherte PRN-Code zur Korrelation im Korrelator ungehindert in dem Code Buffer-Speicher gespeichert und weitergeleitet wird,
oder
- ein ALARM-Befehl 30, ein ERASE-Befehl 28 und/oder ein DISABLE READ-Befehl 32 und/oder ein STOP-Befehl 29 die Signalübertragung unterbricht.

12. Rechnergestütztes Verfahren zur gesicherten Signalübertragung mittels Integritätsprüfung nach Anspruch 11, bei der innerhalb einer vorgegebenen Zeitspanne zumindest ein durch gleichzeitiges Vorausberechnen bestimmten Abschnitt der Codefolge mit einem duplizierten Abschnitt verglichen wird.

13. Rechnergestütztes Verfahren zur gesicherten Signalübertragung mittels Integritätsprüfung nach Anspruch 11 oder 12, bei dem das Auslösen einer Stopp- und/oder Alarmfunktion als Folge der Integritätsprüfung an einen vorgegebenen Schwellwert gekoppelt ist.

14. Rechnergestütztes Verfahren zur gesicherten Signalübertragung mittels Integritätsprüfung nach Anspruch 13, bei dem das Auslösen einer Stopp- und/oder Alarmfunktion als Folge der Integritätsprüfung an das Überschreiten eines vorgegebenen Schwellwerts innerhalb einer vorgegebenen Zeitspanne gekoppelt ist.

15. Rechnergestütztes Verfahren zur gesicherten Signalübertragung mittels Integritätsprüfung nach einem der Ansprüche 10 bis 14, bei dem im Fall einer Nicht-Übereinstimmung eine Stopp-Funktion ausgelöst wird, die die Code-Generierung anhält.

16. Rechnergestütztes Verfahren zur gesicherten Signalübertragung mittels Integritätsprüfung nach einem der Ansprüche 10 bis 15, das zur verschlüsselten unidirektionalen oder bidirektionalen Datenübertragung eingesetzt wird.
